# DEMANDE DE BREVET EUROPEEN

(11) **EP 2 505 057 A1**
(43) Date de publication de la demande: **03.10.2012**
(21) Numéro de dépôt: 12161393.9
(22) Date de dépôt: 27.03.2012
(51) Int. Cl.: A01K 63/02, A01K 63/04

(54) **Procédé d'amélioration de la désorption du gaz carbonique généré par des animaux aquatiques**

(30) Priorité: 28.03.2011 FR 1152542
(71) Demandeur: Fox Aquaculture France Oxygenation, 29800 Saint Urbain (FR)
(72) Inventeur: Sevic, Bohumil, 29800 SAINT URBAIN (FR)
(74) Mandataire: Branger, Jean-Yves

(57) **Abrégé**

La présente invention se rapporte à un procédé d'amélioration de la désorption du gaz carbonique généré par des animaux aquatiques (P) contenus dans un bac (1) formant vivier, qui consiste à générer à l'intérieur dudit bac (1) un courant d'eau (E) sous la forme d'au moins une boucle de recirculation, ce courant d'eau étant créé par insufflation localisée d'air en surpression dans ladite eau (E), caractérisé par le fait qu'on fait usage pour ce faire :
- d'au moins une paire de rampes tubulaires creuses (2 ; 4), dites haute et basse, disposées sensiblement en regard l'une de l'autre, au moins une partie (21 ; 41) de ces rampes (2 ; 4) présentant des ouvertures (0) qui les font communiquer avec l'intérieur dudit vivier (1) ;
- d'au moins une conduite (5) ouverte à sa base et reliant lesdites rampes (4) ;
- de moyens d'amenée et de distribution (3) d'air en surpression, dans ladite conduite, de la base de celle-ci et en direction de son sommet, ces moyens de distribution (3) étant disposés en regard et à distance de ladite base, de sorte qu'une partie de l'eau (E) contenue dans le vivier rentre dans la rampe basse (2), est véhiculée vers le sommet de ladite conduite (5) par le courant généré par l'air, et est redistribuée dans ledit vivier via les ouvertures (41) de la rampe haute (4).

## Description

La présente invention se rapporte à un procédé d'amélioration de la désorption du gaz carbonique généré par des animaux aquatiques contenus dans un bac formant vivier.

La présente invention sera donnée en référence à des poissons. Toutefois, elle peut s'appliquer à d'autres animaux aquatiques tels que des crustacés.

Dans le cas particulier des poissons vivants, ceux-ci ont souvent besoin d'être transportés par camion, bateau ou avion, par exemple pour les diriger vers un étang dans lequel ils seront rejetés ou pour être traités dans un atelier de transformation.

II n'est pas rare que les distances parcourues soient de l'ordre de quelques centaines de kilomètres, voire quelques milliers.

Pour ce faire, ils sont confinés dans des cuves adaptées, contenant de l'eau douce ou de l'eau de mer convenant à l'espèce.

Pour assurer les besoins en oxygène de ces poissons, on injecte dans le bas de la cuve de l'oxygène pur au moyen d'un dispositif poreux.

Le transport dure ainsi de quelques heures à quelques jours.

Comme la plupart des espèces vivantes, les poissons utilisent l'oxygène pour vivre et rejettent du gaz carbonique. Le gaz carbonique se retrouve dans l'eau de la cuve sous forme dissoute. L'eau n'étant a priori pas renouvelée, la concentration en gaz carbonique dissous augmente donc au fil du temps jusqu'à devenir potentiellement toxique pour les poissons.

La plupart des transporteurs n'ont pas notion de la présence et de la dangerosité du gaz carbonique pour les poissons. Toutefois, par expérience et par défaut, des protocoles ont été mis en place qui, sans le savoir, ont pour effet de contenir la concentration de gaz carbonique à des valeurs acceptables pour les poissons.

Ainsi, on agit sur plusieurs paramètres qui vont tous dans le sens de la réduction du taux de gaz carbonique.

En premier lieu, on limite la quantité de poissons transportés dans une cuve. Avec l'expérience, on connaît bien les charges à ne pas dépasser. Les valeurs tiennent compte de l'espèce et de la taille des poissons, de la température de l'eau et du temps de transport.

En second lieu, on ajuste le débit d'oxygène à la demande. Mais, au cours du temps, la concentration en gaz carbonique s'élevant, on utilise par défaut le dispositif poreux d'injection d'oxygène comme moyen pour dégazer ou désorber le gaz carbonique.

Pour cela, on augment le débit d'oxygène.

On arrive ainsi au résultat attendu en ce qui concerne le gaz carbonique, mais au détriment d'une concentration en oxygène qui s'élève à des teneurs qui ont pu être mesurée, allant jusqu'à 350 % de la saturation.

L'oxygène dissous ainsi en grand excès irrite les branchies des poissons et génère un stress aux conséquences redoutées par les chauffeurs des véhicules.

Le transport est finalement assez délicat et devient une affaire de spécialistes.

En troisième lieu, les poissons jeûnent quelques jours avant leur transport en cuve. L'eau restera ainsi assez propre car quasiment dépourvue de déjections et les poissons libèreront relativement peu d'ammoniac.

Enfin, en quatrième lieu, on refroidit l'eau, par exemple par ajout de glace hydrique. Ainsi, on abaisse la température jusqu'à 5 à 6°C, de sorte que le métabolisme des poissons s'en trouve ralenti. La demande d'oxygène diminue et, par conséquent, la production de gaz carbonique est moindre.

On constate ainsi que l'on peut transporter des charges plus conséquentes.

Cette technique de transport utilisée actuellement ne correspond pas aux conditions normales de vie des poissons, les paramètres de gaz dissous étant en excès, tant en oxygène qu'en gaz carbonique.

On décrit dans le document WO 2004/017726 une structure de traitement de l'eau en aquaculture relativement complexe qui comprend une boucle d'épuration formée d'un biofiltre, un système d'écumage (en anglais "skimmer"), ainsi qu'un dispositif d'aération. Le traitement du gaz carbonique n'est pas abordé.

Par ailleurs, on connait par le document GB-810 968 un système de purification pour aquarium. Dans la circulation d'eau est prévu un tube d'injection d'air.

La présente invention vise donc à rationnaliser le milieu de vie du poisson pendant le transport et à amener les paramètres précités au niveau de ceux habituellement connus dans les bassins d'élevage.

Ainsi, la présente invention se rapporte à un procédé formant vivier pour des animaux aquatiques tels que des poissons, qui se caractérise par le fait qu'il comporte :
- au moins une paire de rampes tubulaires creuses, dites haute et basse disposées sensiblement en regard l'une de l'autre, au moins une partie de ces rampes présentant des ouvertures qui les font communiquer avec l'intérieur dudit vivier ;
- au moins une conduite ouverte à sa base et reliant lesdites rampes ;
- des moyens d'amenée et de distribution d'air en surpression, dans ladite conduite, de la base de celle-ci et en direction de son sommet,
ces moyens de distribution étant disposés en regard et à distance de ladite base, de sorte qu'une partie de l'eau contenue dans le vivier rentre dans la rampe basse, est véhiculée vers le sommet de ladite conduite par le courant généré par l'air, et est redistribuée dans ledit vivier via les ouvertures de la rampe haute.

Grâce à cette invention, on va pouvoir contenir la concentration en oxygène dissous dans le bac à une valeur proche de la saturation à l'air, également réduire la quantité de gaz carbonique dégagé par les animaux, mettre en mouvement l'eau du bac pour éviter aux poissons d'avoir à se déplacer pour "chercher" l'oxygène, et enfin utiliser l'eau à la même température que celle des bassins, sans avoir à la refroidir.

Selon d'autres caractéristiques avantageuses et non limitatives de ce procédé :
- la partie des rampes présentant des ouvertures a la forme d'un treillis, d'un grillage ou similaire ;
- lesdites rampes s'étendent parallèlement au fond du bac ;
- ladite conduite est reliée auxdites rampes sensiblement dans leur partie médiane, les ouvertures dans leur paroi s'étendant de part et d'autre de ladite conduite ;
- les moyens d'amenée et de distribution d'air en surpression comprennent une "boîte" connectée à une source d'air en surpression, cette boîte présentant des trous, laissant s'échapper l'air dans ladite conduite sous la forme de bulles ascendantes ;
- lesdits moyens de distribution d'air présentent une section sensiblement identique à celle de ladite conduite.
- son fond est pourvu de moyens de distribution d'oxygène dans l'eau, tel qu'un réseau de tubes perforés.

D'autres caractéristiques et avantages de l'invention apparaîtront à la lecture détaillée de la description qui va suivre d'un mode de réalisation préférentiel. Cette description sera faite en référence aux dessins annexés dans lesquels :
- la figure 1 est une vue de face, selon un plan de coupe vertical et longitudinal, d'un bac formant vivier utilisable dans le cadre de l'invention ;
- la figure 2 est une vue de face d'un équipement permettant une recirculation d'eau à l'intérieur du bac ;
- la figure 3 est une vue en perspective éclatée de la partie inférieure du dispositif de la figure 2 ;
- la figure 4 est une vue rapprochée d'un élément apparaissant à la figure 3 ;
- la figure 5 est une vue de dessus d'un système d'oxygénation dudit bac ;
- enfin, la figure 6 est une vue partielle de côté de la remorque d'un camion équipé de plusieurs bacs et de moyens d'alimentation en oxygène et en air.

Selon l'invention, il est essentiel de gérer les deux paramètres que sont l'oxygène demandé par les animaux, ainsi que le gaz carbonique qu'ils produisent.

Quand on parle de gestion de ces deux paramètres, cela signifie que l'oxygène dissous doit être en quantité suffisante pour la demande des animaux, mais pas en excès comme on le voit souvent et comme expliqué plus haut.

Le gaz carbonique dissous doit être dégazé dans un système adéquat pour que sa capacité à dégazer soit supérieure à la production de CO₂ des animaux.

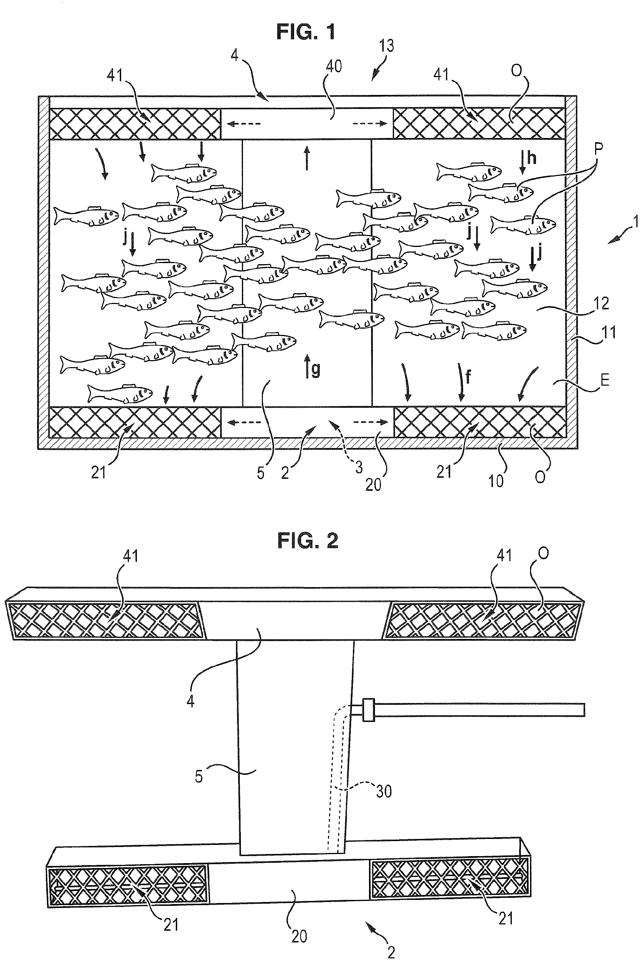

Comme indiqué plus haut, on a représenté à la figure 1, de manière schématique, un bac formant vivier utilisable dans le cadre de l'invention.

Ce bac 1 a la forme d'un parallélépipède rectangle avec une paroi de fond 10, deux parois transversales 11 et deux parois longitudinales 12, l'une des deux seulement étant visible sur cette figure.

II s'agit d'un bac de type classique en matière plastique moulée, et isolé thermiquement. II présente une ouverture supérieure 13 qui, le cas échéant, pourrait être fermée par un couvercle amovible et non représenté.

Ce bac comporte ici une paire de rampes tubulaires creuses, référencées respectivement 2 et 4. La rampe 2 est disposée contre le fond 10 du bac et est qualifiée de « rampe basse », tandis que la rampe 4, voisine du sommet du bac, est qualifiée de « rampe haute ».

Elles sont ici disposées en regard l'une de l'autre et les deux parties opposées de ces rampes présentent des ouvertures O qui les font communiquer avec l'intérieur du vivier. Ces parties sont référencées 21 et 41 sur les figures. A contrario, la partie centrale 20,40 de chacune des rampes 2 et 4 n'est pas ouverte.

Les ouvertures O précitées peuvent être formées comme représentées ici par un treillis, un grillage ou tout moyen similaire.

L'essentiel est que les ouvertures O soient d'une taille telle que les poissons ne puissent pas rentrer à l'intérieur des rampes.

Les rampes sont ici accolées à une paroi longitudinale 12 du bac.

Le cas échéant, et qu'autant que nécessaire, des rampes similaires peuvent équiper la seconde paroi longitudinale. Dans un mode de réalisation alternatif et non représenté, elles peuvent être carrément encastrées dans les parois en question.

Une conduite 5 relie les deux rampes 2 et 4. Elles s'élève verticalement et, ici, en position médiane entre les rampes.

On peut envisager, en variante d'avoir affaire à plus d'une conduite 5.

Les extrémités opposées de la conduite sont ouvertes et communiquent avec les rampes 2 et 4.

Des moyens d'amenée et de distribution d'air en surpression, sont montés à la base de celle-ci et en direction de son sommet.

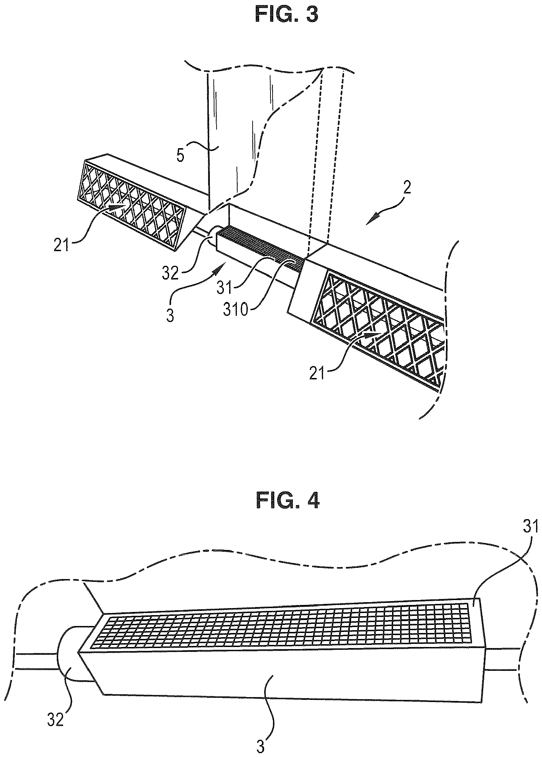

On a représenté à la figure 3 une tubulure 30 d'amenée d'air en surpression jusqu'à l'intérieur de la rampe 2, au niveau de sa partie centrale 20.

Plus précisément, l'air est amené au niveau d'une « boîte à air » référencée 3 dont la face supérieure 31 présente une multitude d'ouvertures ou de trous 310 (par exemple 270 trous d'un diamètre de 1 mm) laissant s'échapper l'air dans la conduite 5 sous forme de bulles ascendantes.

Des résultats particulièrement bons en matière de désorption de gaz carbonique quand les moyens de distribution d'air, en l'occurrence ici la boîte 3, est placée en regard à distance de la base de la conduite 5 et présente une section sensiblement identique à celle de la conduite.

Bien entendu, cette "boîte à air" communique avec la tubulure 30 via un tube 32.

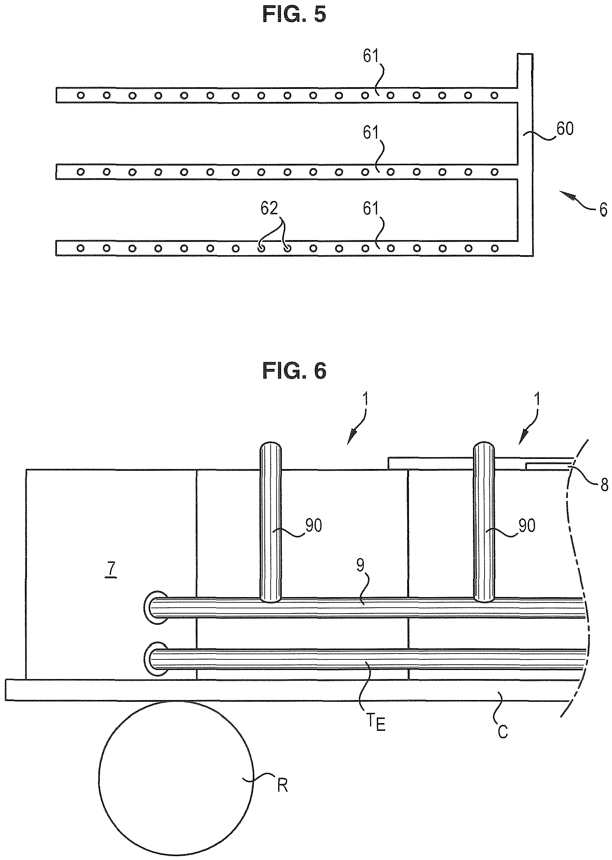

A la figure 5 est représenté, vu de dessus, un dispositif 6 d'oxygénation de l'eau contenue dans le bac. Ce dispositif est formé d'une tubulure 60 et de ramifications parallèles en caoutchouc 61 percées d'ouvertures 62 pour permettre le bullage d'oxygène dans l'eau E.

Enfin, est représentée à la figure 6 une série de bacs 1 conformes à l'invention, montés sur la remorque C d'un véhicule tel qu'un camion, ses roues arrières étant référencées R.

Des moyens, généralement référencés 7, permettent de générer et de conduire de l'oxygène aux différents bacs via un conduit 8 et de l'air en surpression par un conduit 9 et ses ramifications 90. Ces dernières sont pourvues d'une vanne d'isolement et d'un clapet anti-retour.

Un tuyau référencé T_{E} assure le remplissage des bacs en eau.

Les moyens 7 comprennent notamment un moteur thermique combiné à un surpresseur, ou d'une soufflante.

On va maintenant expliquer le fonctionnement du dispositif, essentiellement en référence à la figure 1.

Une partie de l'eau contenue dans le bac rentre à l'intérieur de la rampe inférieure 2 par ses parties 21 selon un courant référencé par la flèche f.

L'eau rentre alors dans la partie centrale de la rampe 2 et est aérée et déplacée selon un courant ascendant selon les flèches g à l'intérieur de la conduite 5. C'est lors de ce parcours que se produit essentiellement la désorption puis rejetée par les ouvertures O de la rampe supérieure 4 selon les flèches h.

II se crée donc un courant continu et descendant j à l'intérieur du bac d'eau chargée de bulles d'air, ce qui améliore grandement la désorption du gaz carbonique rejeté par les poissons.

L'emplacement particulier de la boîte 3 et sa section sensiblement égale à celle du tube 5 contribue à limiter les pertes de charges en entrée de ce tube. Dès lors, la fonction de désorption est efficacement assurée.

On décrit ci-après un exemple d'utilisation d'un tel bac.

Pour la mise en oeuvre de cet exemple il a été choisi de travailler dans des conditions difficiles de transport de truites dites "arc-en-ciel" et de truites "farios". En effet, ces salmonidés sont les plus exigeants pour ce qui est de la demande en oxygène et rejettent, en conséquence, une quantité importante de gaz carbonique.

Les essais ont été réalisés sur un camion comportant cinq bacs parallélépipédiques de 2 m de long, 0,95 m de large et 0,9 m de haut. Ces cuves étaient posées sur le plateau d'un camion, sans système de refroidissement de l'eau. La capacité utile de chaque cuve était de 1550 I. Les poissons transportés avaient un poids unitaire de 300 g.

Dans chaque cuve existait, posé sur le fond, un réseau de tubes perforés permettant de diffuser de l'oxygène pur et répondant à la demande en oxygène des poissons. Ce dispositif d'amenée d'oxygène dissous (tel que celui de la figure 5) a été laissé en place et le débit d'oxygène a été adapté à la demande des poissons.

En ce qui concerne la température de l'eau, il a été décidé de conserver la même température pour les essais. La température de l'eau dans les bacs au départ de l'essai était de 14°C, à savoir une température identique à celle de l'eau des bassins dans laquelle ils vivaient précédemment. Après 12 h de transport, la température était montée à 18°C. La température extérieure était quant à elle de 14°C le matin, 25°C l'après-midi, puis à nouveau 14°C le soir.

En ce qui concerne le dégagement d'ammoniac, il a été demandé à l'exploitant, comme il est habituel dans la profession, que les poissons soient à jeun trois jours avant le transport, de manière à ce que la quantité d'ammoniac soit la plus basse possible.

L'eau utilisée pour le transport contient une faible quantité de CO₂ libre. Le gaz carbonique à dégazer est celui produit par les poissons. II dépend de la température de l'eau et de la dimension des poissons transportés.

On a considéré qu'un litre d'oxygène consommé par les poissons produit 1 1 de gaz carbonique rejeté, ou encore que 1 kg d'oxygène consommé produit 1,375 kg de gaz carbonique, soit un rapport en poids moléculaire de 44/32.

Le tableau ci-dessous donne la production horaire de gaz carbonique en grammes par tonne de truites.

Production horaire de CO₂ en grammes/T de truites

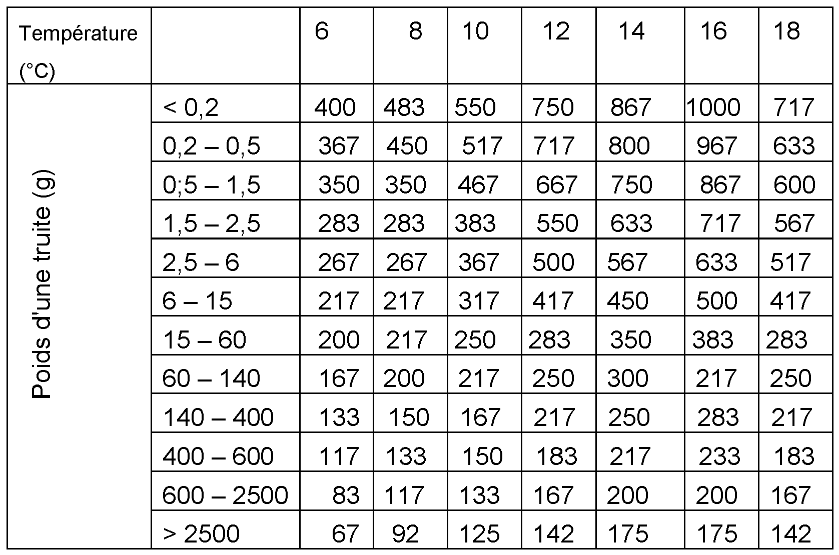

Dans une cuve de 1550 I 1 sont habituellement transportés 300 kg de truites "arc-en-ciel" d'un poids individuels de 300 g. Une mesure lors de l'un de ces transports des teneurs en oxygène et en gaz carbonique a été faite. A la fin du transport, la teneur en oxygène était de 32 mg/l, soit trois fois la normale, et la teneur en gaz carbonique était de 37 mg/l alors que la teneur conseillée doit être au maximum de 10 mg/l. Les truites étaient stressées enfin de transport, ce qui est fréquent et connu des pisciculteurs.

Grâce à la technique selon l'invention, il a été possible de transporter pendant 10 h une charge de 450 kg de truites par cuve, soit 50 % de plus que la norme actuelle, et ce dans des conditions de confort exceptionnelles. La teneur en oxygène a oscillé entre 8 et 12 mg/l et le gaz carbonique n'a pas dépassé 12 mg/l. Ceci correspond à des teneurs connues et normales dans un bassin de pisciculture.

Aucun des poissons ainsi transportés n'a connu de période de stress et aucune mortalité n'a été constatée. Lors de leur arrivée sur le nouveau site, les poissons se sont comportés tout à fait normalement, comme s'ils n'avaient pas quitté leur bassin d'origine. C'est un facteur inhabituel et important pour l'utilisateur qui vend ses poissons à des clients très attentifs à cet aspect.

On notera que l'utilisation d'air comprimé à 400 mbar par un surpresseur provoque un échauffement d'environ 25°C. L'air plus chaud a naturellement tendance à chauffer l'eau des cuves.

Quand le transport a lieu en hiver et que la température atmosphérique est basse, l'incidence sur la température de l'eau de la cuve n'est pas significative.

Par contre, en été, si la température ambiante est élevée, par exemple de 35 à 40°C, la température de l'eau risque de monter de plusieurs degrés. Cette élévation importante peut devenir dangereuse pour les poissons. Il y a lieu dans ce cas de refroidir l'air injecté dans les cuves à une température d'environ 15°C.

Pour ce faire, deux options sont possibles. La première consiste à utiliser un groupe frigorifique adapté à cette demande modeste de froid. La seconde consiste à faire usage d'un réservoir d'oxygène liquide installé sur le camion pour oxygéner de l'eau, la vaporisation et le réchauffement de l'oxygène libérant suffisamment de frigories que l'on peut utiliser dans un échangeur pour refroidir l'air destiné à alimenter le bac.

## Revendications

1. Procédé d'amélioration de la désorption du gaz carbonique généré par des animaux aquatiques (P) contenus dans un bac (1) formant vivier, qui consiste à générer à l'intérieur dudit bac (1) un courant d'eau (E) sous la forme d'au moins une boucle de recirculation, ce courant d'eau étant créé par insufflation localisée d'air en surpression dans ladite eau (E), **caractérisé par le fait que** l'on fait usage pour ce faire :
- d'au moins une paire de rampes tubulaires creuses (2 ; 4), dites haute et basse, disposées sensiblement en regard l'une de l'autre, au moins une partie (21 ; 41) de ces rampes (2 ; 4) présentant des ouvertures (O) qui les font communiquer avec l'intérieur dudit vivier (1) ;
- d'au moins une conduite (5) ouverte à sa base et reliant lesdites rampes (4) ;
- de moyens d'amenée et de distribution (30, 3) d'air en surpression, dans ladite conduite, de la base de celle-ci et en direction de son sommet, ces moyens de distribution (3) étant disposés en regard et à distance de ladite base, de sorte qu'une partie de l'eau (E) contenue dans le vivier rentre dans la rampe basse (2), est véhiculée vers le sommet de ladite conduite (5) par le courant généré par l'air, et est redistribuée dans ledit vivier via les ouvertures (41) de la rampe haute (4).

2. Procédé selon la revendication1, **caractérisé par le fait que** l'on fait usage de rampes (2 ; 4) dont la partie (21 ; 41) présentant des ouvertures (O) a la forme d'un treillis, d'un grillage ou similaire.

3. Procédé selon l'une des revendications précédentes, **caractérisé par le fait que** l'on fait usage de rampes (4) qui s'étendent parallèlement au fond (10) du bac (1).

4. Procédé selon l'une des revendications précédentes, **caractérisé par le fait que** l'on fait usage d'une conduite (5) reliée auxdites rampes (4) sensiblement dans leur partie médiane, les ouvertures (O) dans leur paroi s'étendant de part et d'autre de ladite conduite (5).

5. Procédé selon l'une des revendications précédentes, **caractérisé par le fait que** l'on fait usage de moyens d'amenée et de distribution d'air en surpression qui comprennent une "boîte" (3) connectée à une source d'air en surpression, cette boîte (3) présentant des trous (310), laissant s'échapper l'air dans ladite conduite (5), sous la forme de bulles ascendantes.

6. Procédé selon l'une des revendications précédentes, **caractérisé par le fait que** lesdits moyens de distribution d'air (3) présentent une section sensiblement identique à celle de ladite conduite (5).

7. Procédé selon l'une des revendications précédentes, **caractérisé par le fait que** l'on fait usage d'un bac dont le fond (10) est pourvu de moyens de distribution d'oxygène dans l'eau, tel qu'un réseau (6) de tubes perforés (61).
